# EUROPEAN PATENT APPLICATION

(11) **EP 4 752 747 A1**
(43) Date of publication of application: **03.06.2026**
(21) Application number: 23950301.4
(22) Date of filing: 01.09.2023
(51) Int. Cl.: G06F 16/25

(54) **DATA FEDERATION METHOD, SYSTEM, ELECTRONIC DEVICE, AND STORAGE MEDIUM**

(71) Applicant: Siemens Aktiengesellschaft, 80333 München (DE)
(72) Inventor: GAO, Liang, Chaoyang District, Beijing 100102 (CN); WENG, Changwei, Nanjing, Jiangsu 211100 (CN)
(74) Representative: Isarpatent
(86) International application number: PCT/CN2023/116597
(87) International publication number: WO 2025/043726

(57) **Abstract**

A data federation method, a system, an electronic device, and a storage medium. The data federation system comprises: a control plane (110) and a data plane (120), the data plane (120) being provided with two or more data layers (121), and the data layers (121) being respectively configured to connect different multi-source heterogeneous data systems. The control plane (110) comprises a gateway component (111) and a federation component (112), and each data layer (121) comprises a sidecar component (1211) and a semantic engine (1212). The gateway component (111) is configured to receive a data consumption request corresponding to N data layers, divide the data consumption request into N sub-requests, send same to the sidecar components (1211) of the corresponding data layers among the N data layers, respectively, receive second data returned by the sidecar components (1211) of the N data layers, send same to the federation component (112), and provide first data returned by the federation component (112) to a user. The sidecar components (1211) are configured to receive the sub-requests, then transfer same to the semantic engine (1212) of a current data layer, and return the second data returned by the semantic engine (1212) to the gateway component (111). The semantic engine (1212) is configured to query, on the basis of the sub-requests, source data from the multi-source heterogeneous data system connected to the current data layer and generate the second data on the basis of the source data. The federation component (112) is configured to fuse the second data of the N data layers to generate the first data, wherein N is an integer greater than 1. By means of a service grid technology-based data federation system, the query of service association between the source data in different fields can be implemented, so as to meet the use requirement of real-time change of a service requirement while reducing the costs.

## Description

### Technical Field

The present application relates to a data federation method, system, electronic device, and storage medium.

### Background Art

The management and construction of data assets are crucial. At present, in order to achieve a synergistic effect among different value chains, big data platforms mostly use ETL tools to periodically synchronize data of heterogeneous systems to a data warehouse, so as to create an intelligent business system for visualization and analysis of data.

However, an intelligent business system constructed by using ETL tools needs to customize a data model based on user requirements, obtain data from a data source through fixed data extraction rules and store the data into a data warehouse, and data association and data extraction of heterogeneous systems newly added to the intelligent business system also need to be implemented through customized development. Once user requirements change or a new heterogeneous system is added to the intelligent business system, redevelopment or additional custom development is required, meaning high costs and poor applicability, so it can hardly meet the actual requirements of most enterprises for big data platforms.

Therefore, a new data federation solution is needed to reduce development costs and meet actual application requirements.

### Summary of the Invention

In view of this, the data federation method, apparatus, system, electronic device, and storage medium provided in the present application can meet application requirements of real-time changes in business requirements while reducing costs.

According to a first aspect of embodiments of the present application, a data federation system is provided, including: a control plane and a data plane, the data plane being configured with two or more data layers, wherein each of the data layers is respectively used to connect different multi-source heterogeneous data systems, and the control plane including a gateway component and a federation component, wherein each data layer includes a sidecar component and a semantic engine; the gateway component is used to, after receiving a data consumption request corresponding to N data layers, split the data consumption request into N sub-requests and respectively send the sub-requests to the sidecar components of corresponding data layers among the N data layers, receive second data returned by the sidecar components of the N data layers and transmit the second data to the federation component, and provide first data returned by the federation component to a user; the sidecar component is used to, after receiving the sub-request, transmit the sub-request to the semantic engine of the current data layer, and return second data returned by the semantic engine to the gateway component; the semantic engine is used to, according to the sub-request, query source data from the multi-source heterogeneous data system connected to the current data layer and generate the second data based on the source data; the federation component is used to fuse the second data of the N data layers to generate the first data; where N is an integer greater than 1.

According to a second aspect of embodiments of the present application, a data federation method is provided, where the data federation method is implemented through any one of the data federation systems in claims 1-10, and the method includes:
a gateway component of a control plane receives a data consumption request corresponding to N data layers, splits the data consumption request into N sub-requests according to entity information in the data consumption request, distributes the sub-requests to corresponding data layers according to entity information in each of the sub-requests, and each sub-request includes entity information of one data layer among all entity information of the data consumption request;
after receiving the sub-requests respectively through sidecar components, the N data layers query multi-source heterogeneous data systems according to the entity information in the sub-requests to generate second data and return the second data to the control plane through the sidecar components, the second data being used to indicate business attributes and business associations of entities identified by the entity information in the sub-requests; after receiving the second data of the N data layers through the gateway component, the control plane fuses the second data to generate first data and provides the first data to the user through the gateway component, the first data being used to indicate business attributes and business associations of entities identified by the entity information in the data consumption request;
here, N is an integer greater than 1.

According to a third aspect of embodiments of the present application, an electronic device is provided, including: a processor, a memory, a communication interface, and a bus, wherein the processor, the memory, and the communication interface implement mutual communication through the bus; the memory is used to store at least one executable instruction, and the executable instruction causes the processor to execute operations corresponding to the data federation method described in the above first aspect.

According to a fourth aspect of embodiments of the present application, a computer-readable storage medium is provided, and computer instructions are stored on the computer-readable storage medium, and when the computer instructions are executed by a processor, the processor is caused to execute the data federation method described in the above second aspect.

According to a fifth aspect of embodiments of the present application, a computer program product is provided, the computer program product being tangibly stored on a computer-readable medium and including computer-executable instructions, wherein the computer-executable instructions, when executed, cause at least one processor to execute the data federation method described in the above first aspect.

As can be seen from the above technical solutions, by dividing the data federation system into two parts, a control plane and a data plane, configuring the data plane with two or more data layers, wherein each data layer connects different-domain multi-source heterogeneous data systems respectively and each data layer is configured with a sidecar component, and configuring the control plane with a gateway component, communication between each data layer and the control plane can be implemented through a connection between the sidecar component and the gateway component. The data plane is configured with a semantic engine, the semantic engine can generate second data indicating business associations of its corresponding domain, the control plane is configured with a federation component, the federation component can generate first data capable of indicating business associations of all domains by fusing the second data of each data layer, queries of business associations between source data of various different domains can be implemented through the data federation system based on service mesh technology, and an architecture of loose coupling, high robustness, and low coding is adopted, meaning better flexibility and low development costs, and flexible addition of multi-source heterogeneous data systems can be supported to meet changeable application requirements, thereby meeting application requirements of real-time changes in business requirements while reducing costs.

### Brief Description of the Drawings

FIG. 1 is a schematic architectural diagram of a data federation system according to an embodiment of the present application;
FIG. 2 is a schematic diagram of an application scenario of a data federation system according to an embodiment of the present application;
FIG. 3 is a flowchart of a data federation method according to an embodiment of the present application;
FIG. 4 is a schematic diagram of a first knowledge graph obtained by fusing three second knowledge graphs according to an embodiment of the present application;
FIG. 5 is a flowchart of adding a multi-source heterogeneous data system according to an embodiment of the present application;
FIG. 6 is a schematic diagram of an electronic device according to an embodiment of the present application.

**List of reference numerals:**

| | | | | | |
|---|---|---|---|---|---|
| 100: | data federation system | 110: | control plane | 120: | data plane |
| 121: | data layer | 111 : | gateway component | 112: | federation component |
| 113: | discovery and registration component | 114: | authentication and authorization component | 115: | graph database |
| 1211: | sidecar component | 1212: | semantic engine | 1213: | binding component |
| 1214: | universal connection component | 201: | multi-source heterogeneous data system | 202: | user terminal device |
| 400: | first knowledge graph | 401: | second knowledge graph | 402: | entity |
| 600: | electronic device | 602: | processor | 604: | communication interface |
| 606: | memory | 608: | bus | 610: | program |
| 301: the gateway component of the control plane receives a data consumption request corresponding to N data layers, splits the data consumption request into N sub-requests according to entity information in the data consumption request, and distributes the sub-requests to corresponding data layers according to entity information in each sub-request; | | | | | |
| 302: after receiving the sub-requests respectively through sidecar components, the N data layers query the multi-source heterogeneous data systems according to the entity information in the sub-requests to generate second data and return the second data to the control plane through the sidecar components; | | | | | |
| 303: after receiving the second data of the N data layers through the gateway component, the control plane fuses the second data to generate first data and provides the first data to the user through the gateway component; | | | | | |
| 501: the gateway component of the control plane receives a multi-source heterogeneous data system connection request submitted by a user; | | | | | |
| 502: the gateway component sends the multi-source heterogeneous data system connection request to the sidecar component of a corresponding data layer according to data layer information in the multi-source heterogeneous data system connection request; | | | | | |
| 503: after receiving the multi-source heterogeneous data system connection request through the sidecar component, the data layer establishes a connection with the corresponding multi-source heterogeneous data system according to connection information. | | | | | |

### Specific Embodiments

As described above, an intelligent business system constructed by using ETL tools needs to customize a data model based on user requirements, obtain data from a data source through fixed data extraction rules and store the data into a data warehouse, and data association and data extraction of heterogeneous systems newly added to the intelligent business system also need to be implemented through customized development. Once user requirements change or a new heterogeneous system is added to the intelligent business system, redevelopment or additional custom development is required, meaning high costs and poor applicability, so it can hardly meet the actual requirements of most enterprises for big data platforms.

In addition, source data distributed in heterogeneous systems have various business management relationships with each other, and business associations among data cannot be created and managed through a data model defined by a data warehouse; however, most enterprises in the intelligent manufacturing technical field often need to use a big data platform to query business associations among source data in heterogeneous systems, and at the same time need business associations among source data distributed in heterogeneous systems in the big data platform to be automatically updated with real-time changes in business; obviously, an intelligent business system constructed by using ETL tools cannot meet actual application requirements in this aspect as well.

In embodiments of the present application, by dividing the data federation system into two parts, a control plane and a data plane, configuring the data plane with two or more data layers, wherein each data layer connects different-domain multi-source heterogeneous data systems respectively and each data layer is configured with a sidecar component, configuring the control plane with a gateway component, communication between each data layer and the control plane can be implemented through a connection between the sidecar component and the gateway component. The data plane is configured with a semantic engine, the semantic engine can generate second data covering business associations of its corresponding domain, the control plane is configured with a federation component, the federation component can generate first data covering business associations of all domains by fusing the second data of each data layer; thereby, the data federation system of embodiments of the present application implements querying of business associations among source data of various different domains, and can adopt an architecture of loose coupling, high robustness, and low coding, with better flexibility and low development costs, and can support flexible addition of multi-source heterogeneous data systems so as to meet changeable application requirements.

The data federation method, system, electronic device, and storage medium provided in embodiments of the present application are described in detail below in conjunction with the accompanying drawings.

### Data Federation System

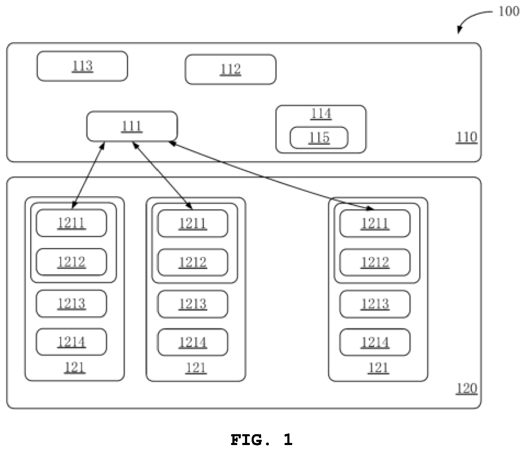

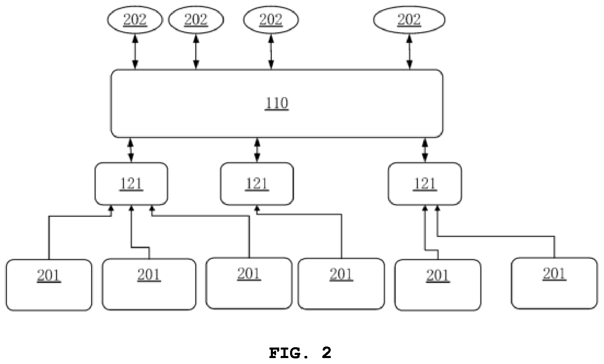

FIG. 1 shows a schematic architectural diagram of a data federation system 100 according to an embodiment of the present application, and FIG. 2 shows a schematic diagram of an application scenario of the data federation system 100 according to an embodiment of the present application.

In embodiments of the present application, the data federation system 100 adopts a service mesh (service mesh) architecture. Referring to FIG. 1 and FIG. 2, the data federation system 100 may include: a control plane 110 and a data plane 120, the data plane 120 may include two or more data layers 121, and each data layer 121 is used to connect different multi-source heterogeneous data systems. Herein, different multi-source heterogeneous data systems refer to multi-source heterogeneous data systems of different domains, and different domains may be, but are not limited to, different businesses, different industries, different projects, and the like. For example, assuming that a data federation system is built for a certain region or a certain industrial park in order to manage data of various industries in the region or the industrial park through the data federation system, if the data federation system includes 3 data layers: data layer A, data layer B, and data layer C, the industries in the region or the industrial park may be divided into three parts according to international industrial categories of the industries, data layer A may be used to connect a multi-source heterogeneous data system of a first part of the industries, data layer B may be used to connect a multi-source heterogeneous data system of a second part of the industries, and data layer C may be used to connect a multi-source heterogeneous data system of a third part of the industries. Accordingly, joint management of multi-source heterogeneous data of various domains can be implemented through the data federation system of embodiments of the present application.

Referring to FIG. 1 and FIG. 2, the control plane 110 may include a gateway component 111 and a federation component 112, and each data layer 121 may include a sidecar component 1211 and a semantic engine 1212. The gateway component 111 can be used to, after receiving a data consumption request corresponding to N data layers, split the data consumption request into N sub-requests and respectively send the sub-requests to sidecar components 1211 of corresponding data layers among the N data layers, receive second data returned by the sidecar components 1211 of the N data layers and transmit the second data to the federation component 112, provide first data returned by the federation component 112 to a user, where N is an integer greater than 1. The sidecar component 1211 can be used to, after receiving a sub-request, transmit the sub-request to the semantic engine 1212 of the current data layer, and return second data returned by the semantic engine 1212 to the gateway component 111. The semantic engine 1212 can be used to, according to the sub-request, query source data from the multi-source heterogeneous data system connected to the current data layer so as to use the source data to generate second data. The federation component 112 can be used to fuse the second data of the N data layers to generate first data.

In embodiments of the present application, by dividing the data federation system into two parts, that is, a control plane and a data plane, configuring the data plane with two or more data layers, wherein each data layer connects different-domain multi-source heterogeneous data systems respectively and each data layer is configured with a sidecar component 1211, and configuring the control plane with a gateway component 111, communication between each data layer and the control plane can be implemented through a connection between the sidecar component 1211 and the gateway component 111. The data plane is configured with a semantic engine 1212, the semantic engine 1212 can generate second data covering its corresponding domain, the control plane is configured with a federation component 112, and the federation component 112 can generate first data covering all domains by fusing the second data of each data layer; thereby, the data federation system of embodiments of the present application implements querying of business associations among source data of various different domains, and can adopt an architecture of loose coupling, high robustness, and low coding, meaning better flexibility and low development costs, and can support flexible addition of multi-source heterogeneous data systems so as to meet changeable application requirements.

The multi-source heterogeneous data system is used to provide multi-source data of a managed object, and the multi-source data includes source data of the managed object in multiple businesses. Different industrial domains may deploy different forms of multi-source heterogeneous data systems. In one example, the managed object may be, for example, an enterprise under a specified industrial category, and the like.

Different data layers connect multi-source heterogeneous data systems of different domains, and are configured with different standard models at the same time, and these standard models are entities. Entities may be flexibly configured in combination with business situations of a specific domain, application requirements, etc. In one example, assuming that data layer A connects a multi-source heterogeneous data system in an intelligent manufacturing industrial domain, multiple entities covering various specific businesses of the intelligent manufacturing industrial domain may be configured in data layer A. There are multiple ways to configure entities. For example, a process of configuring an entity may include: creating an entity, configuring entity information used to uniquely identify the entity, and associating the entity with a standard model, and the like. Embodiments of the present application do not limit the way in which an entity is configured.

Entity information is used to uniquely identify an entity. In one example, the entity information may be, but is not limited to, a name of the entity, a number, or other identifier-type information. Data layer information is used to uniquely identify a data layer. In one example, the data layer information may be, but is not limited to, a name of the data layer, a number, or other identifier-type information.

The first data may indicate business attributes and business associations of entities identified by the entity information in the data consumption request, and the second data may indicate business attributes and business associations of entities identified by the entity information in the sub-request.

The first data may be generated through a pre-constructed first knowledge graph, and the second data may be generated through a pre-constructed second knowledge graph. The first knowledge graph includes entity information of entities in all data layers in the data federation system and association relationship information among these entities, and can represent, in a form of a data view, standard models created in all data layers of the data federation system and association relationships thereof. The second knowledge graph includes entity information of entities in a data layer and association relationship information among entities in the data layer, and can represent, in a form of a data view, a standard model created in a data layer and association relationships thereof.

The first knowledge graph may be formed by fusing the second knowledge graphs of each data layer, and the second knowledge graph may be constructed by the data layer. The semantic engine of each data layer can be used to create standard models based on international industry standards and use the standard models as entities to form a second knowledge graph, and each standard model can be used to perform predetermined algorithm processing on source data of a specific aspect of a business so as to generate attribute information of the specific aspect of the business. Nodes in the second knowledge graph represent entities, that is, standard models, and connections between nodes in the second knowledge graph can indicate association relationships between entities, that is, indicate association relationships between standard models.

The gateway component 111 can be used to implement interaction between the control plane and data layers and interaction between the control plane and a user, and through the gateway component 111, a request by a user can be transmitted to one or more data layers and corresponding information can be returned to the user. In one example, the gateway component 111 can be used not only to receive a data consumption request and/or transmit the data consumption request to one or more data layers, but also to receive one or more of the following requests and distribute the requests to the sidecar component 1211 of a corresponding data layer: a multi-source heterogeneous data system connection request, an entity information request, and a permission configuration request, where the multi-source heterogeneous data system connection request is used to add a new multi-source heterogeneous data system, the entity information request is used to update a first knowledge graph used to generate the first data, and the permission configuration request is used to assign permissions to a user.

The data consumption request may include entity information. In one possible implementation, the gateway component 111 can, by querying a first knowledge graph pre-stored in the control plane, split the data consumption request into multiple sub-requests according to entity information in the data consumption request and distribute the sub-requests to different data layers, and each sub-request includes one piece of data layer information and partial entity information corresponding to this piece of data layer information among the entity information of the data consumption request.

The first knowledge graph can indicate entities in each data layer and association relationships thereof. In one example, the first knowledge graph may be created and stored by the control plane after registration of the data layer. In one possible implementation, the federation component 112 may include a graph database 115, and the federation component 112 can be used to store the first knowledge graph through the graph database 115. In one example, the graph database 115 may also store data layer information of each data layer at the same time, and after receiving the data consumption request, the gateway component 111 can query corresponding data layer information from the graph database and perform splitting of the data consumption request and distribution of the sub-requests thereof.

In one possible implementation, the federation component 112 may implement fusion of the second data through the first knowledge graph pre-stored in the graph database. For example, standard models in each data layer may be obtained through the gateway component 111, the standard models are sent to the federation component 112, the federation component 112 forms, through the graph database, a first knowledge graph including the standard models and association relationships thereof and then stores the first knowledge graph, and the federation component 112 can invoke the first knowledge graph in the graph database to fuse the second data to obtain the first data.

In one example, the federation component 112 can further be used to receive, through the gateway component, a second knowledge graph from a first data layer, update the first knowledge graph in the graph database according to the second knowledge graph of the first data layer, so that the first knowledge graph can include entity information of entities in the first data layer and association relationship information among entities in the first data layer, and association relationship information between entities in the first data layer and existing entities in the first knowledge graph. Here, the first data layer refers to any data layer in the data federation system that has completed registration.

In embodiments of the present application, the sidecar component 1211 refers to a sidecar component 1211 in a service mesh architecture. The sidecar component 1211 can establish a connection with the gateway component 111, and interaction between the data layer and the control plane can be implemented through the connection between the sidecar component 1211 and the gateway component 111. The sidecar component 1211 can be used to transmit data, messages and/or information between the gateway component 111 and other components in the data layer. In one example, the sidecar component 1211 may further provide functions such as registration, discovery agent, flow control, routing, and the like.

The control plane may further include a discovery and registration component 113, and the discovery and registration component 113 can be used to discover a data layer according to data layer information, so that the sidecar component 1211 of the data layer can establish a connection with the gateway component 111. In one example, the discovery and registration component 113 may further be used to perform a registration operation of the data layer so as to enable discovery of the data layer according to the data layer information.

The control plane may further include an authentication and authorization component 114, and the authentication and authorization component 114 is used to perform user authentication and authorization so that the gateway component 111 can perform subsequent processing after user authentication and authorization passes. In one example, the data consumption request may include user identity information, the authentication and authorization component 114 can perform user authentication and authorization according to the user identity information in the data consumption request and generate an authentication and authorization result, and the gateway component 111 can perform splitting of the data consumption request after the authentication and authorization result indicates passing of the user authentication and authorization. In one example, the multi-source heterogeneous data system connection request may also include user identity information, the authentication and authorization component 114 can perform user authentication and authorization according to the user identity information therein and generate an authentication and authorization result, and the gateway component 111 can, after the authentication and authorization result indicates passing of the user authentication and authorization, deliver the multi-source heterogeneous data system connection request to a corresponding data layer.

The user identity information may indicate roles assigned to a user, different roles represent different permissions, and the same user may be assigned multiple roles, that is, the same user may have multiple types of user identity information. In one example, the following roles may be pre-configured: a data management party, a development party, a business party, and the like. These roles have different permissions, and permissions of each role may be preset.

The semantic engine 1212 can be used to generate second data based on source data in the multi-source heterogeneous data system by using various applicable ways. In one possible implementation, the semantic engine 1212 may further be used to create standard models of various industries based on international industry standards and store the standard models locally in a form of a second knowledge graph, and the standard models can be used to generate, by using source data and entity information, business attribute information of entities and association relationship information among different entities. Different standard models may correspond to different entity information. After obtaining entity information by parsing the sub-request, the semantic engine 1212 invokes standard models corresponding to the entity information in the second knowledge graph and association relationships thereof to process source data from the multi-source heterogeneous data system so as to generate business attribute information of entities and association relationship information among different entities, and forms second data by using the business attribute information of entities identified by all entity information in the sub-request and association relationship information thereof.

Each data layer may further include a binding component 1213, and the binding component 1213 can be used to bind the multi-source heterogeneous data system, so that the semantic engine 1212 can query source data from the multi-source heterogeneous data system. In one example, the binding component 1213 may establish and store a mapping relationship between the multi-source heterogeneous data system and entities in the data layer through a low-code paradigm, so that the semantic engine 1212 can query source data from a corresponding multi-source heterogeneous data system according to the entity information and generate second data.

Each data layer may further include a universal connection component 1214, and the universal connection component 1214 is used to configure various types of drivers and multiple protocols, so that the binding component 1213 can bind the multi-source heterogeneous data system according to drivers or protocols supported by the multi-source heterogeneous data system. In one example, the universal connection component 1214 may adopt an integrated data integration framework, and integrate various systems in a configurable manner to support multiple drivers and various protocols. In one example, the universal connection component 1214 may support a new driver by generating a custom plug-in.

In embodiments of the present application, a data layer may adopt a lightweight semantic abstraction architecture, and various components in the data layer may be implemented in a way featuring loose coupling, high robustness, and low coding. In one example, the data layer may further provide a data lake access interface to adapt to requirements of application development.

New functional components may be added to the control plane and/or the data layer of the data federation system, and embodiments of the present application do not limit a specific composition of the control plane and the data layer in the data federation system.

### Data Federation Method

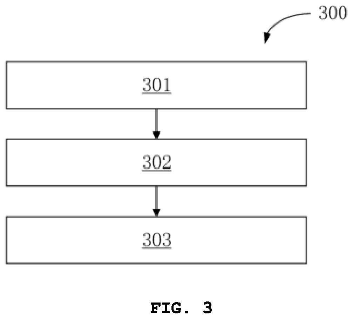

FIG. 3 is a flowchart of a data federation method according to an embodiment of the present application. The data federation method in embodiments of the present application is implemented through the above-described data federation system, and specific implementation logic of the data federation method depends on the architecture of the data federation system and components therein. As shown in FIG. 3, the data federation method 300 includes the following steps:
Step 301: a gateway component of a control plane receives a data consumption request corresponding to N data layers, splits the data consumption request into N sub-requests according to entity information in the data consumption request, and distributes the sub-requests to corresponding data layers according to entity information in each sub-request, where N is an integer greater than 1.

Each sub-request includes entity information of one data layer among all entity information of the data consumption request. In one possible implementation, the gateway component may transmit the entity information in the data consumption request to the federation component, the federation component queries the first knowledge graph stored in the graph database to determine N data layers corresponding to the entity information in the data consumption request and transmits data layer information of the N data layers to the gateway component, the gateway component generates N sub-requests according to the data layer information of the N data layers, and each sub-request includes one piece of data layer information and entity information corresponding to this piece of data layer information in the data consumption request.

The gateway component may establish a connection with the sidecar component of each data layer before distributing the sub-requests, so as to distribute the sub-requests through the connection. In one possible implementation, the discovery and registration component of the control plane may discover each data layer, and the gateway component of the control plane establishes a connection with the sidecar component of each discovered data layer. In one example, in order to be able to discover a data layer, the data layer may be registered to the control plane in advance before the gateway component establishes a connection with the sidecar component. For example, the data layer may, through the sidecar component, send a registration carrying data layer information to the gateway component of the control plane, the gateway component of the control plane transmits the registration request to the discovery and registration component, and the discovery and registration component completes registration of the data layer.

After the data layer completes registration, the first knowledge graph in the graph database may be updated by obtaining entity information of the data layer, so that the gateway component can split the data consumption request according to the first knowledge graph. In one possible implementation, for a registered first data layer, the control plane may, through the gateway component, send an entity information request to the sidecar component of the data layer, and after receiving the entity information request, the sidecar component of the first data layer returns a local second knowledge graph to the gateway component of the control plane, the gateway component of the control plane receives the second knowledge graph of the first data layer and transmits the second knowledge graph to the graph database of the control plane, the federation component of the control plane updates and stores the first knowledge graph in the graph database, so that the first knowledge graph can include entity information of entities in the first data layer and association relationship information among entities in the first data layer, and association relationship information between entities in the first data layer and existing entities in the first knowledge graph. Herein, the first data layer may be any data layer in the data federation system that has been registered onto the control plane.

Before splitting the data consumption request, authentication and authorization may first be performed on a user that initiates the data consumption request, and after it is confirmed that the user has permissions, the request is processed, thereby ensuring security of data assets. In one example, the data consumption request includes user identity information, the identity information is used to indicate permissions of the user, user authentication and authorization may be performed according to the user identity information in the data consumption request, so that the data consumption request is split through the gateway component after the user passes the authentication and authorization. If the user does not pass the authentication and authorization, splitting of the data consumption request and subsequent processing thereof may not be performed.

Various applicable ways may be adopted to assign permissions to a user and configure corresponding user identity information. In one example, the control plane may, through the gateway component, receive a permission configuration request submitted by a user and transmit the permission configuration request to the authentication and authorization component of the control plane, the authentication and authorization component of the control plane generates user identity information in response to the permission configuration request, and provides the user identity information to the user through the gateway component.

Step 302: after receiving the sub-requests respectively through sidecar components, the N data layers query multi-source heterogeneous data systems according to entity information in the sub-requests to generate second data and return the second data to the control plane through the sidecar components.

The second data are generated by the semantic engine of the data layer, and the foregoing description of the data federation system may be referred to for specific technical details, which are not repeated herein.

Step 303: after receiving the second data of the N data layers through the gateway component, the control plane fuses the second data to generate first data and provides the first data to the user through the gateway component.

The first data are generated by the federation component of the control plane, and the foregoing description of the data federation system may be referred to for specific technical details, which are not repeated herein.

The second data may indicate business attributes and business associations of entities identified by the entity information in the sub-request, the first data may indicate business attributes and business associations of entities identified by the entity information in the data consumption request, the second data may be generated according to the second knowledge graph, and the first data may be generated according to the first knowledge graph.

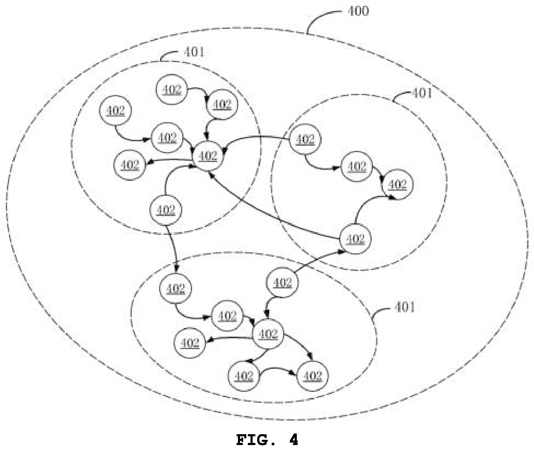

FIG. 4 shows a schematic diagram of a first knowledge graph 400 formed by fusing second knowledge graphs 401 of 3 data layers. In FIG. 4, black solid circles represent entities 402, and connecting lines between black solid circles represent association relationships among the entities 402. Referring to FIG. 4, each second knowledge graph 401 covers business associations of source data in different domains, and the first knowledge graph 400 formed by fusing the second knowledge graphs can cover business associations of source data in an entire multi-domain. It can be seen that embodiments of the present application can generate, through data federation, first data capable of indicating business associations of multiple domains, so that a user can query business associations of multiple domains.

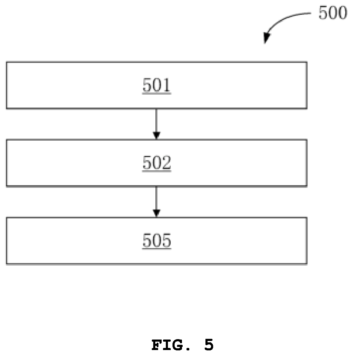

In one possible implementation, a user may initiate a request to add a new multi-source heterogeneous data system to one or more data layers. FIG. 5 shows a flowchart for adding a multi-source heterogeneous data system. As shown in FIG. 5, a process 500 for adding a multi-source heterogeneous data system may include the following steps:
Step 501: the gateway component of the control plane receives a multi-source heterogeneous data system connection request submitted by a user, and the multi-source heterogeneous data system connection request carries connection information and data layer information;
Step 502: the gateway component sends the multi-source heterogeneous data system connection request to the sidecar component of a corresponding data layer according to the data layer information in the multi-source heterogeneous data system connection request; Step 503: after receiving the multi-source heterogeneous data system connection request through the sidecar component, the data layer establishes a connection with the corresponding multi-source heterogeneous data system according to the connection information.

The connection information may indicate a connection address of the multi-source heterogeneous data system, and a driver and/or a protocol of the multi-source heterogeneous data system may be queried, by the binding component of the data layer, from drivers and/or protocols configured in the universal connection component according to the connection information, and the queried driver and/or protocol is used to establish a connection between the multi-source heterogeneous data system and the data layer based on the connection information.

### Electronic Device

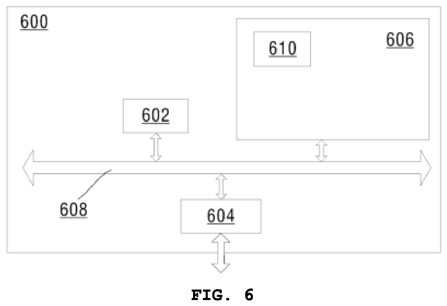

FIG. 6 is a schematic diagram of an electronic device provided in Embodiment 4 of the present application, and specific embodiments of the present application do not limit a specific implementation of the electronic device. Referring to FIG. 6, the electronic device 600 provided in embodiments of the present application includes: a processor (processor) 602, a communications interface (Communications Interface) 604, a memory (memory) 606, and a bus 608. Herein:
the processor 602, the communications interface 604, and the memory 606 perform mutual communication through the bus 608.

The communications interface 604 is used to communicate with other electronic devices or servers.

The processor 602 is used to execute a program 610, and specifically may execute relevant steps in the above-described embodiments of the data federation method.

Specifically, the program 610 may include a program code, and the program code includes computer operation instructions.

The processor 602 may be a central processing unit (CPU), or an application-specific integrated circuit (ASIC) (Application-Specific Integrated Circuit), or one or more integrated circuits configured to implement embodiments of the present application. One or more processors included in the intelligent device may be processors of the same type, such as one or more CPUs; or they may be processors of different types, such as one or more CPUs and one or more ASICs.

The memory 606 is used to store the program 610. The memory 606 may include a highspeed RAM memory, and may also include a non-volatile memory (non-volatile memory), such as at least one disk memory.

The program 610 may specifically be used to cause the processor 602 to execute the data federation method in any of the above-described embodiments.

For specific implementations of each step in the program 610, reference may be made to corresponding descriptions in corresponding steps and units in the above-described embodiments of the data federation method, and details are not repeated herein. A person skilled in the art can clearly understand that for convenience and brevity of description, specific working processes of the devices and modules described in the above may refer to the corresponding process descriptions in the above-described method embodiments, and details thereof are not repeated herein.

Through the electronic device of this embodiment, by dividing the data federation system into two parts, i.e., a control plane and a data plane, configuring the data plane with two or more data layers, wherein each data layer connects different-domain multi-source heterogeneous data systems respectively and each data layer is configured with a sidecar component, and configuring the control plane with a gateway component, communication between each data layer and the control plane can be implemented through a connection between the sidecar component and the gateway component. The data plane is configured with a semantic engine, the semantic engine can generate second data covering business associations of its corresponding domain, the control plane is configured with a federation component, the federation component can generate first data covering business associations of all domains by fusing the second data of each data layer; thereby, the data federation system of embodiments of the present application implements querying of business associations among source data of various different domains, and can adopt an architecture of loose coupling, high robustness, and low coding, meaning better flexibility and low development costs, and can support flexible addition of multi-source heterogeneous data systems so as to meet changeable application requirements.

### Computer-Readable Storage Medium

The present application further provides a computer-readable storage medium storing instructions for causing a machine to execute the data federation method as described herein. Specifically, a system or apparatus equipped with a storage medium may be provided, where a software program code for implementing functions of any embodiment among the above embodiments is stored on the storage medium, and a computer (or a CPU or an MPU) of the system or apparatus is caused to read and execute the program code stored in the storage medium.

In this case, the program code read from the storage medium itself can implement functions of any of the above-described embodiments, and therefore the program code and the storage medium storing the program code constitute part of the present application. Storage medium embodiments used to provide a program code include a floppy disk, a hard disk, a magneto-optical disk, an optical disk (such as a CD-ROM, CD-R, CD-RW, DVD-ROM, DVD-RAM, DVD-RW, DVD+RW), a magnetic tape, a non-volatile storage card, and a ROM. Optionally, the program code may be downloaded from a server computer via a communication network.

In addition, it should be clear that not only may part or all of the actual operations be completed by executing the program code read by the computer, but also part or all of the actual operations may be completed by causing an operating system and the like operating on the computer based on instructions of the program code, thereby implementing functions of any of the above-described embodiments.

In addition, it can be understood that the program code read from the storage medium is written into a memory provided in an expansion board inserted into the computer or written into a memory provided in an expansion module connected to the computer, and then based on instructions of the program code, a CPU and the like installed on the expansion board or the expansion module execute part and all of the actual operations, thereby implementing functions of any of the above-described embodiments.

### Computer Program Product

Embodiments of the present application further provide a computer program product, where the computer program product is tangibly stored on a computer-readable medium and includes computer-executable instructions, and the computer-executable instructions, when executed, cause at least one processor to execute the data federation method provided in the above-described embodiments. It should be understood that solutions in this embodiment have corresponding technical effects in the above-described method embodiments, and details thereof are not repeated herein.

It should be noted that not all steps and modules in the above-described processes and device structure diagrams are necessary, and some steps or modules may be omitted according to actual needs. The execution order of the steps is not fixed, and may be adjusted according to needs. System structures described in the above-described embodiments may be physical structures or may be logical structures, that is, some modules may be implemented by the same physical entity, or some modules may be separately implemented by multiple physical entities, or may be jointly implemented by some components in multiple independent devices.

Nouns and pronouns regarding persons in this patent application are not limited to a specific gender.

In the above-described embodiments, hardware modules may be implemented in a mechanical manner or an electrical manner. For example, a hardware module may include permanent dedicated circuits or logic (such as a dedicated processor, an FPGA, or an ASIC) to complete corresponding operations. A hardware module may further include programmable logic or circuits (such as a general-purpose processor or other programmable processor), which may be temporarily configured by software to complete corresponding operations. A specific implementation manner (a mechanical manner, or dedicated permanent circuits, or temporarily configured circuits) may be determined based on considerations of cost and time.

The present application has been shown and described in detail in the above through accompanying drawings and preferred embodiments, but the present application is not limited to the disclosed embodiments. Based on the multiple embodiments described in the above, a person skilled in the art may know that more embodiments of the present application can be obtained by combining code review means in different embodiments described in the above, and these embodiments are also within the protection scope of the present application.

## Claims

1. A data federation system (100), comprising: a control plane and a data plane, wherein the data plane is configured with two or more data layers, wherein each of the data layers is respectively used to connect different multi-source heterogeneous data systems; and wherein the control plane comprises a gateway component and a federation component, and each data layer comprises a sidecar component and a semantic engine;
the gateway component is configured to, after receiving a data consumption request corresponding to N data layers, split the data consumption request into N sub-requests and respectively send the sub-requests to the sidecar component of the corresponding data layer among the N data layers, receive second data returned by sidecar components of the N data layers and transmit the second data to the federation component, and provide first data returned by the federation component to a user;
the sidecar component is configured to, after receiving the sub-request, transmit the sub-request to the semantic engine of a current data layer, and return second data returned by the semantic engine to the gateway component;
the semantic engine is configured to query source data from the multi-source heterogeneous data system connected to the current data layer according to the sub-request and generate the second data based on the source data;
the federation component is configured to fuse the second data of the N data layers to generate the first data;
N is an integer greater than 1.

2. The data federation system as claimed in claim 1, wherein the data consumption request comprises entity information; each sub-request comprises entity information of one data layer among the entity information of the data consumption request, the first data are used to indicate business attributes and business associations of entities identified by the entity information in the data consumption request, and the second data are used to indicate business attributes and business associations of entities identified by the entity information in the sub-request.

3. The data federation system as claimed in claim 1, wherein the federation component comprises a graph database, and the federation component is configured to store a first knowledge graph through the graph database, wherein the first knowledge graph comprises entity information in each of the data layers and association relationship information of entities identified by the entity information, so that the gateway component can split the data consumption request according to the first knowledge graph and determine a data layer corresponding to each sub-request.

4. The data federation system as claimed in claim 3, wherein the federation component is further configured to receive, through the gateway component, a second knowledge graph from a first data layer, update the first knowledge graph in the graph database according to the second knowledge graph of the first data layer, so that the first knowledge graph can comprise entity information of entities in the first data layer and association relationship information among entities in the first data layer, and association relationship information between entities in the first data layer and existing entities in the first knowledge graph;
the second knowledge graph of the first data layer comprises entity information of entities in the first data layer and association relationship information among entities in the first data layer.

5. The data federation system as claimed in claim 4, wherein the semantic engine of each data layer is further configured to create standard models according to industry standards and form the second knowledge graph by using the standard models as entities.

6. The data federation system as claimed in claim 3, wherein the gateway component is further configured to receive the following requests and distribute the requests to the sidecar component of a corresponding data layer: a multi-source heterogeneous data system connection request, an entity information request, and a permission configuration request, wherein the multi-source heterogeneous data system connection request is used to add a new multi-source heterogeneous data system, the entity information request is used to update the first knowledge graph, and the permission configuration request is used to assign permissions to a user.

7. The data federation system as claimed in claim 1, wherein the control plane further comprises a discovery and registration component, and the discovery and registration component is configured to discover a data layer according to data layer information, so that the sidecar component of the data layer can establish a connection with the gateway component.

8. The data federation system as claimed in claim 7, wherein the discovery and registration component is further configured to perform a registration operation of a data layer so as to enable discovery of the data layer according to the data layer information.

9. The data federation system as claimed in claim 1, wherein the control plane further comprises: an authentication and authorization component, which is configured to perform user authentication and authorization, so that the gateway component can perform subsequent processing after a successful user authentication and authorization.

10. The data federation system as claimed in claim 9, wherein the authentication and authorization component is further configured to, in response to a permission configuration request received by the gateway component, assign the user identity information to a user.

11. A data federation method (300), wherein the data federation method is implemented through any one of the data federation systems in claims 1-10, and the method comprises:
a gateway component of a control plane receives a data consumption request corresponding to N data layers, splits the data consumption request into N sub-requests according to entity information in the data consumption request, distributes the sub-requests to corresponding data layers according to entity information in each sub-request, and each sub-request comprises entity information of one data layer among all entity information of the data consumption request;
after receiving the sub-requests respectively through sidecar components, the N data layers query multi-source heterogeneous data systems according to the entity information in the sub-requests to generate second data and return the second data to the control plane through the sidecar components, wherein the second data are used to indicate business attributes and business associations of entities identified by the entity information in the sub-requests;
after receiving the second data of the N data layers through the gateway component, the control plane fuses the second data to generate first data and provides the first data to a user through the gateway component, wherein the first data is used to indicate business attributes and business associations of entities identified by the entity information in the data consumption request;
N is an integer greater than 1.

12. The method as claimed in claim 11, wherein splitting the data consumption request into N sub-requests according to the entity information in the data consumption request comprises:
the gateway component transmits the entity information in the data consumption request to the federation component;
the federation component queries the first knowledge graph stored in the graph database to determine N data layers corresponding to the entity information in the data consumption request and transmits data layer information of the N data layers to the gateway component;
the gateway component generates N sub-requests according to the data layer information of the N data layers, and each of the sub-request comprises one piece of the data layer information and entity information corresponding to the data layer information in the data consumption request.

13. The method as claimed in claim 12, wherein before distributing the sub-requests to corresponding data layers according to the entity information in each sub-request, the method further comprises:
the discovery and registration component of the control plane discovers each data layer;
the gateway component of the control plane establishes a connection with the sidecar component of each discovered data layer, so that the sub-requests are sent to the sidecar component of the data layer through the connection.

14. The method as claimed in claim 13, the method further comprises:
a data layer sends a registration request to the gateway component of the control plane through the sidecar component, the registration request carrying data layer information;
the gateway component of the control plane transmits the registration request to the discovery and registration component, and the discovery and registration component performs registration of the data layer, so that the discovery and registration component of the control plane can discover the data layer.

15. The method as claimed in any one of claims 11-14, wherein the method further comprises:
the control plane sends an entity information request to a sidecar component of a first data layer through the gateway component;
after receiving the entity information request, the sidecar component of the first data layer returns a local second knowledge graph to the gateway component of the control plane;
the gateway component of the control plane receives the second knowledge graph of the data layer and transmits the second knowledge graph to the federation component of the control plane, and the federation component updates the first knowledge graph, so that the first knowledge graph can comprise entity information of entities in the first data layer and association relationship information among entities in the first data layer, and association relationship information between entities in the first data layer and existing entities in the first knowledge graph;
the second knowledge graph of the first data layer comprises entity information of entities in the first data layer and association relationship information among entities in the first data layer.

16. The method as claimed in claim 11, wherein the data consumption request comprises user identity information, and the identity information is used to indicate permissions of a user;
before splitting the data consumption request into sub-requests according to the entity information in the data consumption request, the method further comprises: performing user authentication and authorization according to the user identity information in the data consumption request, so as to split the data consumption request through the gateway component after a successful authentication and authorization.

17. The method as claimed in claim 16, wherein the method further comprises:
the control plane receives a permission configuration request submitted by a user through the gateway component and transmits the permission configuration request to an authentication and authorization component of the control plane;
the authentication and authorization component of the control plane generates user identity information in response to the permission configuration request, and provides the user identity information to the user through the gateway component.

18. The method as claimed in claim 11, wherein the method further comprises:
the gateway component of the control plane receives a multi-source heterogeneous data system connection request submitted by a user, wherein the multi-source heterogeneous data system connection request carries connection information and data layer information;
the gateway component sends the multi-source heterogeneous data system connection request to a sidecar component of a corresponding data layer according to the data layer information in the multi-source heterogeneous data system connection request;
after receiving the multi-source heterogeneous data system connection request through the sidecar component, the data layer establishes a connection with a corresponding multi-source heterogeneous data system according to the connection information.

19. An electronic device (600), comprising: a processor (602), a communication interface (604), a memory (606), and a bus (608), wherein the processor (602), the communication interface (604), and the memory (606) complete mutual communication through the bus (608);
the memory (606) is used to store at least one executable instruction, and the executable instruction causes the processor (602) to execute operations corresponding to any one of the methods in claims 11-18.

20. A computer-readable storage medium, wherein computer instructions are stored on the computer-readable storage medium, and when the computer instructions are executed by a processor, the processor is caused to execute any one of the methods in claims 11-18.

21. A computer program product, wherein the computer program product is tangibly stored on a computer-readable medium and includes computer-executable instructions, and the computer-executable instructions, when executed, cause at least one processor to execute the method as claimed in any one of claims 11-18.
